# EUROPEAN PATENT APPLICATION

(11) **EP 4 675 821 A1**
(43) Date of publication of application: **07.01.2026**
(21) Application number: 23927902.9
(22) Date of filing: 17.03.2023
(51) Int. Cl.: H01M 50/449, H01M 50/409, H01M 50/44

(54) **SEPARATOR, SECONDARY BATTERY, AND ELECTRICAL DEVICE**

(71) Applicant: Contemporary Amperex Technology (Hong Kong) Limited, Hong Kong (HK)
(72) Inventor: WANG, Zhaoguang, Ningde, Fujian 352100 (CN); YANG, Jianrui, Ningde, Fujian 352100 (CN); SUN, Chengdong, Ningde, Fujian 352100 (CN); HUANG, Siying, Ningde, Fujian 352100 (CN); OUYANG, Chuying, Ningde, Fujian 352100 (CN); HAN, Chongwang, Ningde, Fujian 352100 (CN)
(74) Representative: Gong, Jinping
(86) International application number: PCT/CN2023/082283
(87) International publication number: WO 2024/192583

(57) **Abstract**

This application provides a separator, a secondary battery, and an electric apparatus, where the separator includes a first base film, a second base film, and an adhesive layer. The adhesive layer is disposed between the first base film and the second base film. A melting point of the second base film is higher than a melting point of the first base film. A tortuosity of the first base film is greater than a tortuosity of the second base film.

## Description

### TECHNICAL FIELD

This application relates to a separator, a secondary battery, and an electric apparatus.

### BACKGROUND

**In** recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the application and promotion of secondary batteries, requirements for their reliability have gradually become stricter.

### SUMMARY

This application provides a separator, a secondary battery, and an electric apparatus, aiming to enhance the reliability of the secondary battery and extend the cycle life of the secondary battery.

According to a first aspect, this application provides a separator including a first base film, a second base film, and an adhesive layer, where the adhesive layer is disposed between the first base film and the second base film, a melting point of the second base film is higher than a melting point of the first base film, and a tortuosity of the first base film is greater than a tortuosity of the second base film.

In the separator provided by the embodiment of this application, the first base film with a lower melting point has a greater tortuosity, which, on one hand, reduces the probability of shrinkage of the first base film under heated conditions, thereby decreasing a thermal shrinkage rate of the separator and improving the reliability of the secondary battery; and, on the other hand, allows the first base film to have a longer ion transmission path, so that when the first base film of the separator faces a negative electrode, lithium ions have greater difficulty passing through the first base film, thus slowing down a rate at which lithium ions reach the negative electrode and further delaying growth of lithium dendrites. Additionally, in the separator provided by the embodiment of this application, the second base film with a higher melting point has a smaller tortuosity, which, on one hand, complements the first base film, enabling the separator to possess good air permeability and thus good ion conduction performance, thereby enhancing electrochemical performance and rate performance of the secondary battery; and, on the other hand, due to the higher melting point of the second base film, when the tortuosity is smaller, a degree of shrinkage of the base film under heated conditions is also lower, enabling the separator to maintain good heat resistance and further improving the reliability of the secondary battery. Furthermore, the separator provided by the embodiment of this application can also block lithium dendrites layer by layer through a structure of base film-adhesive layer-base film. This can effectively delay continuous growth of lithium dendrites, reduce physical extrusion on the separator caused by lithium dendrites, thereby lowering a risk of the separator being pierced and causing a short circuit between a positive electrode and the negative electrode, and extending the cycle life of the secondary battery. Therefore, the separator provided by the embodiment of this application can enhance the reliability of the secondary battery and also extend the cycle life of the secondary battery.

In any embodiment of this application, a ratio of the tortuosity of the second base film to the tortuosity of the first base film is greater than 1.02, optionally ranging from 1.05 to 4.

By adjusting the ratio of the tortuosity of the first base film to the tortuosity of the second base film within the above suitable range, the performance of the first base film and the second base film can better complement each other, thereby further enhancing the heat resistance of the separator and enabling the separator to possess good air permeability. This contributes to improving the reliability and cycle life of the secondary battery.

In any embodiment of this application, the tortuosity of the first base film ranges from 1 to 6, optionally from 1.5 to 5.5.

In any embodiment of this application, the tortuosity of the second base film ranges from 0.3 to 4, optionally from 0.5 to 3.5.

This contributes to improving an ionic conductivity of the separator, thereby further enhancing the rate performance of the secondary battery and extending the cycle life of the secondary battery.

In any embodiment of this application, a ratio of a conductivity of the first base film to a conductivity of the second base film is less than 1, optionally ranging from 0.4 to 0.8.

By adjusting the ratio of the conductivity of the first base film to the conductivity of the second base film within the above suitable range, not only can the ratio of the tortuosity of the first base film to the tortuosity of the second base film be adjusted within a suitable range, but an ionic resistance of the separator can also be reduced. Thus, when the separator provided by the embodiment of this application is applied to the secondary battery, the secondary battery can have a suitable internal resistance, which contributes to the secondary battery achieving both high reliability and good long-term cycle performance.

In any embodiment of this application, the conductivity of the first base film ranges from 0.2 ms/cm to 2.0 ms/cm, optionally from 0.6 ms/cm to 1.5 ms/cm.

In any embodiment of this application, the conductivity of the second base film ranges from 0.4 ms/cm to 2.0 ms/cm, optionally from 0.8 ms/cm to 1.5 ms/cm.

This not only allows adjustment of the tortuosity of the first base film, the second base film, and the separator, but also enables better complementary performance between the first base film and the second base film, providing the separator with good heat resistance and high ionic conductivity, thereby improving both the reliability of the secondary battery and a long-term capacity retention rate of the secondary battery.

In any embodiment of this application, a ratio of a porosity of the first base film to a porosity of the second base film ranges from 0.4 to 0.9, optionally from 0.45 to 0.65.

By adjusting the ratio of the porosity of the first base film to the porosity of the second base film within the above suitable range, the ratio of the tortuosity of the first base film to the tortuosity of the second base film can be adjusted within a suitable range. This contributes to further improving the reliability and long-term cycle performance of the secondary battery. Additionally, by adjusting the ratio of the porosity of the first base film to the porosity of the second base film within the above suitable range, an active ion transmission performance of the separator can also be enhanced, thereby further extending the cycle life of the secondary battery.

In any embodiment of this application, the porosity of the first base film ranges from 30% to 60%, optionally from 35% to 50%.

In any embodiment of this application, the porosity of the second base film ranges from 25% to 85%, optionally from 40% to 80%.

By adjusting the porosity of the first base film and/or the porosity of the second base film within the above suitable range, the active ion transmission performance of the separator can be further enhanced, enabling the separator to have high ionic conductivity, which contributes to further extending the cycle life of the secondary battery.

In any embodiment of this application, a ratio of a thickness of the first base film to a thickness of the second base film ranges from 0.5 to 3.5, optionally from 1.2 to 2.5.

By adjusting the ratio of the thickness of the first base film to the thickness of the second base film within the above suitable range, the ratio of the tortuosity of the first base film to the tortuosity of the second base film can be adjusted within a suitable range while enabling the separator to have a suitable thickness and high mechanical strength. A suitable thickness of the separator contributes to maintaining a high energy density of the secondary battery. High mechanical strength of the separator contributes to improving a puncture resistance of the separator, thereby enhancing the durability of the separator and enabling the secondary battery to achieve high reliability.

In any embodiment of this application, the thickness of the first base film is less than or equal to 10 µm, optionally ranging from 2 µm to 7 µm.

In any embodiment of this application, the thickness of the second base film is less than or equal to 12 µm, optionally ranging from 1 µm to 6 µm.

By adjusting the thickness of the first base film and/or the thickness of the second base film within the above range, not only can the tortuosity and mechanical strength of the first base film, the second base film, and the separator be adjusted, but the secondary battery can also achieve high energy density. Additionally, by adjusting the thickness of the first base film and/or the thickness of the second base film within the above range, the puncture resistance and tensile strength of the first base film and/or the second base film can be enhanced. Thus, during the growth of lithium dendrites, the first base film and/or the second base film can serve as a barrier and buffer, reducing physical extrusion on the separator caused by lithium dendrites and lowering a risk of the separator being pierced and causing a short circuit between the positive electrode and the negative electrode, thereby further improving the reliability of the secondary battery.

In any embodiment of this application, a ratio of the melting point of the first base film to the melting point of the second base film ranges from 0.3 to 0.85, optionally from 0.4 to 0.7.

Adjusting the ratio of the melting point of the first base film to the melting point of the second base film within the above suitable range can facilitate better complementary performance between the first base film and the second base film, thereby effectively enhancing the heat resistance of the separator and further improving the reliability of the secondary battery.

In any embodiment of this application, the melting point of the first base film is greater than or equal to 120°C, further optionally ranging from 125°C to 260°C.

In any embodiment of this application, the melting point of the second base film is greater than or equal to 150°C, further optionally ranging from 160°C to 350°C.

By adjusting the melting point of the first base film and/or the melting point of the second base film within the above range, the tortuosity of the first base film, the second base film, and the separator can be adjusted, and the separator can also have good pore-closing characteristics, enabling the separator to not only possess good ion conduction performance under normal operating conditions of the secondary battery but also close pores in time to block current conduction when thermal runaway occurs in the secondary battery. This enables the secondary battery to achieve both good cycle performance and high reliability.

In any embodiment of this application, a material of the first base film includes one or more of polyolefin and derivatives thereof, halogenated polyolefin and derivatives thereof, polyether and derivatives thereof, polyether ether ketone and derivatives thereof, polyester and derivatives thereof, polyimide and derivatives thereof, and polyvinyl alcohol and derivatives thereof.

In any embodiment of this application, a material of the second base film includes one or more of polyolefin and derivatives thereof, halogenated polyolefin and derivatives thereof, polyether and derivatives thereof, polyether ether ketone and derivatives thereof, polyester and derivatives thereof, polyimide and derivatives thereof, and polyvinyl alcohol and derivatives thereof.

In any embodiment of this application, the adhesive layer includes a binder. Optionally, the adhesive layer includes a binder and a filler.

In any embodiment of this application, the binder includes one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

In any embodiment of this application, the filler includes at least one of inorganic particles, organic particles, and an organic-metal framework material.

Optionally, the inorganic particles include one or more of inorganic particles with a dielectric constant of 5 or higher, inorganic particles with ion conductivity but not storing ions, and inorganic particles capable of undergoing electrochemical reactions.

Optionally, the organic particles include one or more of polycarbonate, polythiophene, polypyridine, polystyrene, polyacrylic wax, polyethylene, polypropylene, cellulose, cellulose modifiers, melamine resin, phenolic resin, polyester, silicone resin, polyimide, polyamide-imide, polyaramid, polyphenylene sulfide, polysulfone, polyethersulfone, polyether ether ketone, polyaryl ether ketone, and a copolymer of butyl acrylate and ethyl methacrylate.

Optionally, the organic-metal framework material includes one or more of a structure constructed with nitrogen-containing heterocyclic ligands, a structure constructed with organic carboxylic acid ligands, and a structure constructed with mixed nitrogen-oxygen ligands.

In any embodiment of this application, a thickness of the adhesive layer is greater than or equal to 0.3 µm, optionally ranging from 0.5 µm to 2 µm.

In any embodiment of this application, a bonding strength between the adhesive layer and the first base film is greater than or equal to 3 N/m, optionally ranging from 4 N/m to 15 N/m.

In any embodiment of this application, a bonding strength between the adhesive layer and the second base film is greater than or equal to 3 N/m, optionally ranging from 4 N/m to 15 N/m.

In any embodiment of this application, a percentage of the binder is greater than or equal to 10%, optionally ranging from 30% to 50%, based on a total weight of the adhesive layer.

In any embodiment of this application, a percentage of the filler ranges from 40% to 90%, optionally from 60% to 80%, based on the total weight of the adhesive layer.

In any embodiment of this application, a volume distribution particle size Dv50 of the filler is less than or equal to 1 µm, optionally ranging from 0.3 µm to 0.6 µm.

In any embodiment of this application, a tortuosity of the separator ranges from 1 to 15, optionally from 2 to 10.

Optionally, a porosity of the separator is less than or equal to 65%, optionally ranging from 35% to 55%.

When the tortuosity and/or porosity of the separator meet the above suitable range, the separator can have good heat resistance and ion conduction capability, thereby improving the reliability and electrochemical performance of the secondary battery.

Optionally, a transverse thermal shrinkage rate of the separator at 250°C for 1 hour is less than or equal to 1.5%, optionally less than or equal to 1%.

Optionally, a longitudinal thermal shrinkage rate of the separator at 250°C for 1 hour is less than or equal to 1.5%, optionally less than or equal to 1%.

When the transverse thermal shrinkage rate and/or longitudinal thermal shrinkage rate of the separator meet the given range, the separator can have good heat resistance, thereby improving the reliability of the secondary battery and reducing a probability of safety incidents such as fire or explosion in the secondary battery.

A second aspect of this application provides a secondary battery including the separator according to the first aspect of this application.

In any embodiment of this application, the secondary battery includes a positive electrode plate and a negative electrode plate, where the separator is disposed between the positive electrode plate and the negative electrode plate, and the first base film of the separator faces the negative electrode plate, and the second base film faces the positive electrode plate.

A third aspect of this application provides an electric apparatus including the secondary battery of the second aspect of this application.

The electric apparatus in this application includes the secondary battery provided in this application, and therefore has at least advantages that are the same as those of the secondary battery.

### BRIEF DESCRIPTION OF DRAWINGS

To describe the technical solutions of the embodiments of this application more clearly, the following briefly describes the accompanying drawings for describing the embodiments of this application. Apparently, the accompanying drawings in the following descriptions show merely some embodiments of this application, and persons of ordinary skill in the art may derive other drawings from these accompanying drawings without creative efforts.
FIG. 1 is a schematic diagram of an embodiment of a secondary battery provided by this application.
FIG. 2 is a schematic exploded view of an embodiment of a secondary battery provided by this application.
FIG. 3 is a schematic diagram of an embodiment of a battery module provided by this application.
FIG. 4 is a schematic diagram of an embodiment of a battery pack provided by this application.
FIG. 5 is an exploded schematic view of the embodiment of the battery pack shown in FIG. 4.
FIG. 6 is a schematic diagram of an embodiment of an electric apparatus using a secondary battery provided by this application as a power source.

In the accompanying drawings, the figures are not necessarily drawn to scale. Reference signs are as follows: 1. battery pack; 2. upper box body; 3. lower box body; 4. battery module; 5. secondary battery; 51. housing; 52. electrode assembly; and 53. cover plate.

### DESCRIPTION OF EMBODIMENTS

The following detailed descriptions specifically disclose embodiments of the separator and a preparation method thereof, the secondary battery, and the electric apparatus of this application with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, in this application, the terms "first", "second", and the like are intended to distinguish between different objects rather than to indicate a particular order or relative importance.

In this application, the term "a plurality of" means two or more than two and the term "a plurality of types" means two types or more than two types.

Unless otherwise specified, the terms used in this application have well-known meanings commonly understood by persons skilled in the art.

Unless otherwise specified, numerical values of parameters mentioned in this application may be measured by using various measurement methods commonly used in the art, for example, they may be measured by using the methods provided in the embodiments of this application. Unless otherwise specified, a test temperature of each parameter is 25°C.

Unless otherwise specified, ratio parameters involved in this application are compared under the same unit. For example, a thickness ratio of A to B is 1.2:1, where the thickness units of A and B are the same.

### Separator

Typically, a secondary battery includes an electrode assembly and an electrolyte, where the electrode assembly includes a positive electrode plate, a negative electrode plate, and a separator, and the separator is disposed between the positive electrode plate and the negative electrode plate, primarily to prevent a short circuit between the positive electrode and the negative electrode.

An embodiment of this application provides a separator including a first base film, a second base film, and an adhesive layer, where the adhesive layer is disposed between the first base film and the second base film, a melting point of the second base film is higher than a melting point of the first base film, and a tortuosity of the first base film is greater than a tortuosity of the second base film.

Currently, separators used in commercial secondary batteries are typically polyolefin porous films, which have relatively poor heat resistance and undergo significant thermal shrinkage when heated, causing direct contact between the positive electrode and the negative electrode inside the battery, leading to an internal short circuit and increasing safety risks of the secondary battery. To address the above issue, current measures primarily involve coating a heat-resistant inorganic ceramic layer on the polyolefin porous film. However, the inorganic ceramic layer has a limited effect on improving the heat resistance of the separator; additionally, the inorganic ceramic layer has poor adhesion and is prone to powder shedding issues. This results in lower reliability of the secondary battery.

Not intended to be limited by any theory or explanation, when the separator includes the first base film, the second base film, and the adhesive layer disposed between the two, the separator can achieve both good heat resistance and suitable air permeability. Thus, the separator provided by the embodiment of this application can enhance the reliability of the secondary battery and extend the cycle life of the secondary battery.

Specifically, when a melting point of a base film is low, adjusting the base film to have a smaller tortuosity can enhance air permeability of the base film, but under heated conditions, a degree of thermal shrinkage of fibers in the base film increases, leading to an increased thermal shrinkage rate of the separator, a higher probability of a short circuit between the positive electrode and the negative electrode, and reduced reliability of the secondary battery. In the separator provided by the embodiment of this application, the first base film with a lower melting point has a greater tortuosity, which, on one hand, reduces the probability of shrinkage of the first base film under heated conditions, thereby decreasing the thermal shrinkage rate of the separator and improving the reliability of the secondary battery; and, on the other hand, allows the first base film to have a longer ion transmission path, so that when the first base film of the separator faces the negative electrode, lithium ions have greater difficulty passing through the first base film, thus slowing down a rate at which lithium ions reach the negative electrode and further delaying growth of lithium dendrites. Additionally, in the separator provided by the embodiment of this application, the second base film with a higher melting point has a smaller tortuosity, which, on one hand, complements the first base film, enabling the separator to possess good air permeability and thus good ion conduction performance, thereby enhancing electrochemical performance and rate performance of the secondary battery; and, on the other hand, due to the higher melting point of the second base film, when the tortuosity is smaller, a degree of shrinkage of the base film under heated conditions is also lower, enabling the separator to maintain good heat resistance and further improving the reliability of the secondary battery.

Furthermore, the separator provided by the embodiment of this application can also block lithium dendrites layer by layer through a structure of base film-adhesive layer-base film. This can effectively delay continuous growth of lithium dendrites, and reduce physical extrusion on the separator caused by lithium dendrites, thereby lowering a risk of the separator being pierced and causing a short circuit between the positive electrode and the negative electrode, and extending the cycle life of the secondary battery.

Therefore, the separator provided by the embodiment of this application can enhance the reliability of the secondary battery and extend the cycle life of the secondary battery.

In some embodiments, a ratio of the tortuosity of the first base film to the tortuosity of the second base film may be greater than or equal to 1.02.

For example, the ratio of the tortuosity of the first base film to the tortuosity of the second base film may be 1.02, 1.05, 1.1, 1.5, 2, 2.5, 3, 3.5, 4, 4.5, or a range formed by any two of the above values.

Optionally, in some embodiments, the ratio of the tortuosity of the first base film to the tortuosity of the second base film may also be 1.05-4, 1.5-4, 2-4, 2.5-4, 3-4, 3.5-4, 1.05-3.5, 1.5-3.5, 2-3.5, 2.5-3.5, 3-3.5, 1.05-3, 1.5-3, 2-3, 2.5-3, 1.05-2.5, 1.5-2.5, 2-2.5, 1.05-2, 1.5-2, or 1.05-1.5.

Not intended to be limited by any theory or explanation, by adjusting the ratio of the tortuosity of the first base film to the tortuosity of the second base film within the above suitable range, the performance of the first base film and the second base film can better complement each other, thereby further enhancing the heat resistance of the separator and enabling the separator to possess good air permeability. This contributes to improving the reliability and cycle life of the secondary battery.

In some embodiments, the tortuosity of the first base film may range from 1 to 6, for example, 1, 1.5, 2, 2.5, 3, 3.5, 4, 4.5, 5, 5.5, 6, or a range formed by any two of the above values.

Optionally, in some embodiments, the tortuosity of the first base film may also range from 1.5 to 5.5, for example, 1.5, 2, 2.5, 3, 3.5, 4, 4.5, 5, 5.5, or a range formed by any two of the above values.

In some embodiments, the tortuosity of the second base film may range from 0.3 to 4, for example, 0.3, 0.5, 1, 1.5, 2, 2.5, 3, 3.5, 4, or a range formed by any two of the above values.

Optionally, in some embodiments, the tortuosity of the second base film may range from 0.5 to 3.5, for example, 0.5, 0.8, 1, 1.2, 1.5, 1.8, 2, 2.2, 2.5, 2.8, 3, 3.2, 3.5, or a range formed by any two of the above values.

Not intended to be limited by any theory or explanation, when the ratio of the tortuosity of the first base film to the tortuosity of the second base film is within a suitable range, further adjusting the tortuosity of the first base film and/or the tortuosity of the second base film within the above suitable range contributes to improving the ionic conductivity of the separator. This contributes to further enhancing the rate performance of the secondary battery and extending the cycle life of the secondary battery.

The tortuosity of a base film has a well-known meaning in the art and can be tested using known equipment and methods. For example, the tortuosity τ of the base film can be calculated according to a tortuosity calculation formula τ = (Rᵢₒₙ * ε) / R_{EL}. In the above calculation formula:
ε represents the porosity of the base film and can be measured using a mercury intrusion porosimeter in accordance with GB/T 21650.1-2008.
Rᵢₒₙ represents an ionic resistance of the base film, measured in Ω. The ionic resistance can be tested using an electrochemical workstation (such as a VMP3B electrochemical workstation) by an electrochemical impedance spectroscopy (Electrochemical Impedance Spectroscopy, EIS) method with a symmetrical battery. Specifically, the base film is punched into a sample of a certain size (for example, 45.3 mm * 33.7 mm), a thickness of the sample is recorded as I, an area of the sample is recorded as S, and a test sample is prepared by sequentially stacking a lithium sheet, the sample, and a lithium sheet. The test sample is placed in an outer package, an electrolyte is injected to obtain a symmetrical battery. To improve accuracy, the ionic resistance of base films with different layer numbers N can be tested, and a slope obtained by plotting multiple ionic resistance values against the number of base film layers N is taken as the ionic resistance Rᵢₒₙ. A test voltage may range from -1 V to 1 V, and a frequency of an alternating current signal may range from 1 MHz to 1 kHz.

R_{EL} represents an ionic resistance of the electrolyte at 25°C and can be calculated according to a formula R_{EL} = I / (σ * S), measured in Ω; I represents the thickness of the base film sample used in the symmetrical battery (referring to a thickness of a single-layer base film sample), measured in micrometers (µm); S represents the area of the base film sample used in the symmetrical battery, measured inmm²; σ represents a conductivity of the electrolyte used in the symmetrical battery, measured in ms/cm, and can be tested using a conductivity tester in accordance with 7SJ/T 11723-2018 (test temperature is 25°C).

The tortuosity of the first base film and/or the second base film can be obtained by adjusting intrinsic parameters of the base film (such as one or more of composition, average fiber diameter, porosity, thickness, air permeability, and density) and/or preparation process parameters of the first base film (such as one or more of stretching parameters and heat-setting parameters). For example, under otherwise unchanged conditions, a larger average fiber diameter results in greater tortuosity; a greater thickness results in greater tortuosity; greater air permeability results in smaller tortuosity; greater porosity results in smaller tortuosity; greater density results in greater tortuosity; a higher stretching ratio during preparation results in smaller tortuosity, and so on. Persons skilled in the art can obtain a base film with a desired tortuosity through a limited number of experiments.

In some embodiments, a ratio of a conductivity of the first base film to a conductivity of the second base film may be less than 1.

For example, the ratio of the conductivity of the first base film to the conductivity of the second base film may be 0.99, 0.95, 0.9, 0.85, 0.8, 0.75, 0.7, 0.65, 0.6, 0.55, 0.5, 0.45, 0.4, 0.35, or a range formed by any two of the above values.

Optionally, in some embodiments, the ratio of the conductivity of the first base film to the conductivity of the second base film may also be 0.4-0.8, 0.5-0.8, 0.6-0.8, 0.7-0.8, 0.4-0.7, 0.5-0.7, 0.6-0.7, 0.4-0.6, 0.5-0.6, or 0.4-0.5.

Not intended to be limited by any theory or explanation, by adjusting the ratio of the conductivity of the first base film to the conductivity of the second base film within the above suitable range, not only can the ratio of the tortuosity of the first base film to the tortuosity of the second base film be adjusted within a suitable range, but the ionic resistance of the separator can also be reduced. Thus, when the separator provided by the embodiment of this application is applied to the secondary battery, the secondary battery can have a suitable internal resistance, which contributes to the secondary battery achieving both high reliability and good long-term cycle performance.

In some embodiments, the conductivity of the first base film may range from 0.2 ms/cm to 2.0 ms/cm, for example, 0.2 ms/cm, 0.5 ms/cm, 0.8 ms/cm, 1.0 ms/cm, 1.2 ms/cm, 1.5 ms/cm, 1.8 ms/cm, 2.0 ms/cm, or a range formed by any two of the above values.

Optionally, in some embodiments, the conductivity of the first base film may also range from 0.6 ms/cm to 1.5 ms/cm, for example, 0.6 ms/cm, 0.7 ms/cm, 0.8 ms/cm, 0.9 ms/cm, 1.0 ms/cm, 1.1 ms/cm, 1.2 ms/cm, 1.3 ms/cm, 1.4 ms/cm, 1.5 ms/cm, or a range formed by any two of the above values.

In some embodiments, the conductivity of the second base film may range from 0.4 ms/cm to 2.0 ms/cm, for example, 0.4 ms/cm, 0.8 ms/cm, 1.0 ms/cm, 1.2 ms/cm, 1.5 ms/cm, 1.8 ms/cm, 2.0 ms/cm, or a range formed by any two of the above values.

Optionally, in some embodiments, the conductivity of the second base film may also range from 0.8 ms/cm to 1.5 ms/cm, for example, 0.8 ms/cm, 0.9 ms/cm, 1.0 ms/cm, 1.1 ms/cm, 1.2 ms/cm, 1.3 ms/cm, 1.4 ms/cm, 1.5 ms/cm, or a range formed by any two of the above values.

Not intended to be limited by any theory or explanation, by adjusting the conductivity of the first base film and/or the conductivity of the second base film within the above range, the tortuosity of the first base film, the second base film, and the separator can be adjusted, and the performance of the first base film and the second base film can better complement each other, enabling the separator to have good heat resistance and high ionic conductivity, thereby improving both the reliability of the secondary battery and the long-term capacity retention rate of the secondary battery.

The conductivity of the first base film and the second base film has a well-known meaning in the art and can be tested using equipment and methods known in the art. For example, the conductivity can be tested using an alternating current impedance meter in accordance with NB-T 10827-2021.

In some embodiments, a ratio of a porosity of the first base film to a porosity of the second base film may range from 0.4 to 0.9, for example, 0.4, 0.45, 0.5, 0.55, 0.6, 0.65, 0.7, 0.75, 0.8, 0.85, 0.9, or a range formed by any two of the above values.

Optionally, in some embodiments, the ratio of the porosity of the first base film to the porosity of the second base film may also be 0.45-0.65, 0.5-0.65, 0.55-0.65, 0.6-0.65, 0.45-0.6, 0.5-0.6, 0.55-0.6, 0.45-0.55, 0.5-0.55, or 0.45-0.5.

Not intended to be limited by any theory or explanation, by adjusting the ratio of the porosity of the first base film to the porosity of the second base film within the above suitable range, the ratio of the tortuosity of the first base film to the tortuosity of the second base film can be adjusted within a suitable range. This contributes to further improving the reliability and long-term cycle performance of the secondary battery. Additionally, by adjusting the ratio of the porosity of the first base film to the porosity of the second base film within the above suitable range, the active ion transmission performance of the separator can also be enhanced, thereby further extending the cycle life of the secondary battery.

In some embodiments, the porosity of the first base film may range from 30% to 60%, for example, 30%, 35%, 40%, 45%, 50%, 55%, 60%, or a range formed by any two of the above values.

Optionally, in some embodiments, the porosity of the first base film may also range from 35% to 50%, for example, 35%, 38%, 40%, 42%, 45%, 48%, 50%, or a range formed by any two of the above values.

In some embodiments, the porosity of the second base film may range from 25% to 85%, for example, 25%, 30%, 35%, 40%, 45%, 50%, 55%, 60%, 65%, 70%, 75%, 80%, 85%, or a range formed by any two of the above values.

Optionally, in some embodiments, the porosity of the second base film may also range from 40% to 80%, for example, 40%, 45%, 50%, 55%, 60%, 65%, 70%, 75%, 80%, or a range formed by any two of the above values.

Not intended to be limited by any theory or explanation, by adjusting the porosity of the first base film and/or the porosity of the second base film within the above suitable range, the active ion transmission performance of the separator can be further enhanced, enabling the separator to have high ionic conductivity, which contributes to further extending the cycle life of the secondary battery.

The porosity of the first base film and the second base film has a well-known meaning in the art and can be measured using equipment and methods known in the art. For example, the porosity can be tested using a mercury intrusion porosimeter in accordance with GB/T 21650.1-2008.

In some embodiments, a ratio of a thickness of the first base film to a thickness of the second base film may range from 0.5 to 3.5, for example, 0.5, 0.8, 1.0, 1.2, 1.5, 1.8, 2.0, 2.2, 2.5, 2.8, 3.0, 3.2, 3.5, or a range formed by any two of the above values.

Optionally, in some embodiments, the ratio of the thickness of the first base film to the thickness of the second base film may also be 1.2-2.5, 1.5-2.5, 1.8-2.5, 2.0-2.5, 2.2-2.5, 1.2-2.2, 1.5-2.2, 1.8-2.2, 2.0-2.2, 1.2-2.0, 1.5-2.0, 1.8-2.0, 1.2-1.8, 1.5-1.8, or 1.2-1.5.

Not intended to be limited by any theory or explanation, by adjusting the ratio of the thickness of the first base film to the thickness of the second base film within the above suitable range, the ratio of the tortuosity of the first base film to the tortuosity of the second base film can be adjusted within a suitable range while enabling the separator to have a suitable thickness and high mechanical strength. A suitable thickness of the separator contributes to maintaining a high energy density of the secondary battery. High mechanical strength of the separator contributes to improving the puncture resistance of the separator, thereby enhancing the durability of the separator and enabling the secondary battery to achieve high reliability.

In some embodiments, the thickness of the first base film may be less than or equal to 10 µm, for example, 10 µm, 9 µm, 8 µm, 7 µm, 6 µm, 5 µm, 4 µm, 3 µm, 2 µm, 1 µm, 0.5 µm, or a range formed by any two of the above values.

Optionally, in some embodiments, the thickness of the first base film may also range from 2 µm to 7 µm, for example, 2 µm, 3 µm, 4 µm, 5 µm, 6 µm, 7 µm, or a range formed by any two of the above values.

In some embodiments, the thickness of the second base film may be less than or equal to 12 µm, for example, 12 µm, 11 µm, 10 µm, 9 µm, 8 µm, 7 µm, 6 µm, 5 µm, 4 µm, 3 µm, 2 µm, 1 µm, 0.5 µm, or a range formed by any two of the above values.

Optionally, in some embodiments, the thickness of the second base film may also range from 1 µm to 6 µm, for example, 1 µm, 2 µm, 3 µm, 4 µm, 5 µm, 6 µm, or a range formed by any two of the above values.

Not intended to be limited by any theory or explanation, by adjusting the thickness of the first base film and/or the thickness of the second base film within the above range, not only can the tortuosity and mechanical strength of the first base film, the second base film, and the separator be adjusted, but the secondary battery can also achieve high energy density. Additionally, by adjusting the thickness of the first base film and/or the thickness of the second base film within the above range, the puncture resistance and tensile strength of the first base film and/or the second base film can be enhanced. Thus, during the growth of lithium dendrites, the first base film and/or the second base film can serve as a barrier and buffer, reducing physical extrusion on the separator caused by lithium dendrites and lowering a risk of the separator being pierced and causing a short circuit between the positive electrode and the negative electrode, thereby further improving the reliability of the secondary battery.

The thickness of the first base film and the second base film has a well-known meaning in the art and can be measured using equipment and methods known in the art. For example, six groups of parallel samples can be taken, thicknesses of different positions for each group of samples are measured using a micrometer thickness gauge, at least 20 positions are measured for each group of samples, and an average value of the thicknesses of the six groups of samples is taken as the thickness of the sample.

In some embodiments, a ratio of the melting point of the first base film to the melting point of the second base film may range from 0.3 to 0.85, for example, 0.3, 0.35, 0.4, 0.45, 0.5, 0.55, 0.6, 0.65, 0.7, 0.75, 0.8, 0.85, or a range formed by any two of the above values.

Optionally, in some embodiments, the ratio of the melting point of the first base film to the melting point of the second base film may also be 0.4-0.7, 0.5-0.7, 0.55-0.7, 0.6-0.7, 0.65-0.7, 0.4-0.65, 0.45-0.65, 0.5-0.65, 0.55-0.65, 0.6-0.65, 0.4-0.6, 0.45-0.6, 0.5-0.6, 0.55-0.6, 0.4-0.55, 0.45-0.55, 0.5-0.55, 0.4-0.5, 0.45-0.5, 0.4-0.45.

Not intended to be limited by any theory or explanation, adjusting the ratio of the melting point of the first base film to the melting point of the second base film within the above suitable range can facilitate better complementary performance between the first base film and the second base film, thereby effectively enhancing the heat resistance of the separator and further improving the reliability of the secondary battery.

In some embodiments, the melting point of the first base film may be greater than or equal to 120°C, for example, 120°C, 130°C, 135°C, 140°C, 150°C, 155°C, 160°C, 165°C, 170°C, 175°C, 180°C, 200°C, 220°C, 240°C, 260°C, or a range formed by any two of the above values.

Optionally, in some embodiments, the melting point of the first base film may also be 125°C-260°C, 130°C-260°C, 140°C-260°C, 150°C-260°C, 160°C-260°C, 170°C-260°C, 125°C-200°C, 130°C-200°C, 140°C-200°C, 150°C-200°C, 160°C-200°C, 125°C-180°C, 130°C-180°C, 140°C-180°C, 150°C-180°C, 125°C-150°C, 130°C-150°C, or 140°C-150°C.

In some embodiments, the melting point of the second base film may be greater than or equal to 150°C, for example, 150°C, 160°C, 165°C, 170°C, 180°C, 190°C, 200°C, 220°C, 240°C, 260°C, 280°C, 300°C, 320°C, 330°C, 350°C, or a range formed by any two of the above values.

Optionally, in some embodiments, the melting point of the second base film may also be 160°C-350°C, 170°C-350°C, 180°C-350°C, 200°C-350°C, 160°C-320°C, 170°C-320°C, 180°C-320°C, 200°C-320°C, 160°C-300°C, 180°C-300°C, or 200°C-300°C.

Not intended to be limited by any theory or explanation, by adjusting the melting point of the first base film and/or the melting point of the second base film within the above range, the tortuosity of the first base film, the second base film, and the separator can be adjusted, and the separator can also have good pore-closing characteristics, enabling the separator to not only possess good ion conduction performance under normal operating conditions of the secondary battery but also close pores in time to block current conduction when thermal runaway occurs in the secondary battery. This enables the secondary battery to achieve both good cycle performance and high reliability.

The melting point of the first base film and the second base film has a well-known meaning in the art and can be measured using equipment and methods known in the art. For example, the melting point can be measured by differential scanning calorimetry. Specifically, the measurement can be conducted in accordance with standard GB/T 19466.3-2004. As an example, the measurement can be performed as follows: Take a 4 mg to 6 mg sample to be tested, place the sample in a sample chamber of a differential scanning calorimeter, raise a temperature from 25°C to 400°C at a heating rate of 10°C/min, obtain a melting endothermic curve of the sample, and a temperature corresponding to a peak of the curve is the melting point of the sample.

In some embodiments, the first base film and the second base film may each independently include one or more selected from polyolefin and derivatives thereof, halogenated polyolefin and derivatives thereof, polyether and derivatives thereof, polyether ether ketone and derivatives thereof, polyester and derivatives thereof, polyimide and derivatives thereof, and polyvinyl alcohol and derivatives thereof.

Optionally, the halogenated polyolefin and derivatives thereof may include one or more selected from polytetrafluoroethylene and derivatives thereof, polyvinyl fluoride and derivatives thereof, and polyvinylidene fluoride and derivatives thereof.

Optionally, the polyester and derivatives thereof may include one or more of polyethylene terephthalate and derivatives thereof, and polybutylene terephthalate and derivatives thereof.

Derivatives typically refer to products derived from substitution of hydrogen atoms or atomic groups in a polymer with other atoms or atomic groups.

In some embodiments, the adhesive layer may include a binder. The binder can provide the separator with good heat resistance and improve the reliability of the secondary battery while ensuring adhesion strength and uniformity between the first base film and the second base film.

In some embodiments, the binder may include one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

In some embodiments, the adhesive layer may include a binder and a filler. The filler can further improve the heat resistance and physical properties (such as tensile strength and puncture strength) of the separator, thereby enhancing the reliability of the secondary battery. The filler is located between the first base film and the second base film, thus also avoiding powder shedding issues.

As an example, in some embodiments, the filler may include at least one of inorganic particles, organic particles, and an organic-metal framework material.

Optionally, the inorganic particles may include one or more of inorganic particles with a dielectric constant of 5 or higher, inorganic particles with ion conductivity but not storing ions, and inorganic particles capable of undergoing electrochemical reactions.

Optionally, the organic particles may include one or more of polycarbonate, polythiophene, polypyridine, polystyrene, polyacrylic wax, polyethylene, polypropylene, cellulose, cellulose modifiers (such as carboxymethyl cellulose), melamine resin, phenolic resin, polyester (such as polyethylene terephthalate, polyethylene naphthalate, and polybutylene terephthalate), silicone resin, polyimide, polyamide-imide, polyaramid, polyphenylene sulfide, polysulfone, polyethersulfone, polyether ether ketone, polyaryl ether ketone, and a copolymer of butyl acrylate and ethyl methacrylate (such as a crosslinked polymer of butyl acrylate and ethyl methacrylate).

Optionally, the organic-metal framework material may include one or more of a structure constructed with nitrogen-containing heterocyclic ligands, a structure constructed with organic carboxylic acid ligands, and a structure constructed with mixed nitrogen-oxygen ligands.

In some embodiments, a percentage of the binder may be greater than or equal to 10%, optionally ranging from 10% to 30%, based on a total weight of the adhesive layer.

In some embodiments, a percentage of the filler may be 40%- 90%, optionally 60%-80%, 65%-80%, 70%-80%, 75%-80%, 60%-75%, 65%-75%, 70%-75%, 60%-70%, 65%-70%, or 60%-65%, based on the total weight of the adhesive layer.

In some embodiments, the adhesive layer may also include a dispersant, such as carboxymethyl cellulose, which can adjust a viscosity of an adhesive layer slurry, improving film quality and uniformity.

In some embodiments, a thickness of the adhesive layer may be greater than or equal to 0.3 µm, optionally ranging from 0.5 to 2 µm. When the thickness of the adhesive layer is within the above range, the separator can have a suitable thickness, and the separator can also have good heat resistance and physical properties, thereby improving the reliability of the secondary battery.

A test method for the thickness of the adhesive layer may refer to the test method for the thickness of the first base film and the second base film.

In some embodiments, a bonding strength between the adhesive layer and the first base film may be greater than or equal to 3 N/m, optionally ranging from 4 N/m to 15 N/m.

In some embodiments, a bonding strength between the adhesive layer and the second base film may be greater than or equal to 3 N/m, optionally ranging from 4 N/m to 15 N/m.

In some embodiments, a volume distribution particle size Dv50 of the filler may be less than or equal to 1 µm, optionally being 0.3 µm-0.6 µm, 0.35 µm-0.55 µm, 0.4 µm-0.5 µm, or 0.45 µm-0.5 µm.

In some embodiments, a tortuosity of the separator may range from 1 to 15, for example, 1, 3, 5, 7, 9, 11, 13, 15, or a range formed by any two of the above values. Optionally, the tortuosity of the separator may also range from 2 to 10, for example, 2, 3, 4, 5, 6, 7, 8, 9, 10, or a range formed by any two of the above values.

In some embodiments, a porosity of the separator may be less than or equal to 65%, optionally ranging from 35% to 55%.

A test method for the tortuosity and porosity of the separator may refer to the test method for the tortuosity and porosity of the first base film and the second base film.

When the tortuosity and/or porosity of the separator meet the above suitable range, the separator can have good heat resistance and ion conduction capability, thereby improving the reliability and electrochemical performance of the secondary battery.

In some embodiments, a transverse thermal shrinkage rate of the separator at 250°C for 1 hour may be less than or equal to 1.5%, optionally less than or equal to 1%.

In some embodiments, a longitudinal thermal shrinkage rate of the separator at 250°C for 1 hour may be less than or equal to 1.5%, optionally less than or equal to 1%.

When the transverse thermal shrinkage rate and/or longitudinal thermal shrinkage rate of the separator meet the given range, the separator can have good heat resistance, thereby improving the reliability of the secondary battery and reducing a probability of safety incidents such as fire or explosion in the secondary battery.

The transverse thermal shrinkage rate and longitudinal thermal shrinkage rate of the separator have well-known meanings in the art and can be measured using equipment and methods known in the art. For example, both can be tested in accordance with GB/T 36363-2018.

### Preparation method

Embodiments of this application also provide a method for preparing the separator provided by the embodiment of this application.

The method includes the following steps: Provide a first base film and a second base film, where a melting point of the second base film is higher than a melting point of the first base film, and a tortuosity of the first base film is greater than a tortuosity of the second base film; provide an adhesive layer slurry, where the adhesive layer slurry includes a binder; apply the adhesive layer slurry onto the first base film and/or the second base film; and composite the first base film and the second base film to obtain the separator.

When the first base film and the second base film are composited through the adhesive layer slurry, the process is simple and can further improve the heat resistance and physical properties of the separator, thereby enhancing the reliability of the secondary battery. When the first base film and the second base film are composited through the adhesive layer slurry, process defects during hot pressing can also be avoided. In a hot pressing composite process, if a temperature is too high, a porosity of the separator becomes smaller and air permeability deteriorates; if the temperature is too low, adhesion between the first base film and the second base film becomes weak, thus requiring selection of a suitable hot pressing temperature.

In some embodiments, the adhesive layer slurry may also include a filler. Optionally, the filler may include at least one of inorganic particles, organic particles, and an organic-metal framework material.

In some embodiments, a coating method of the adhesive layer slurry may adopt transfer coating, spin coating, dip coating, or the like, and embodiments of this application impose no limitation on this.

Unless otherwise specified, all raw materials used in the preparation method of the separator can be commercially obtained.

### Secondary battery

Embodiments of this application also provide a secondary battery.

The secondary battery, also referred to as a rechargeable battery or a storage battery, is a battery that can be charged after being discharged to activate active materials for continuous use. Typically, a secondary battery includes an electrode assembly and an electrolyte. The electrode assembly includes a positive electrode plate, a negative electrode plate, and a separator. The separator is disposed between the positive electrode plate and the negative electrode plate, mainly to prevent a short circuit between the positive electrode and the negative electrode and allow active ions to pass through freely to form a closed loop.

This application imposes no specific limitation on a type of the secondary battery; for example, the secondary battery may be a lithium-ion battery, a sodium-ion battery, a lithium metal battery, a sodium metal battery, or the like, and in particular, the secondary battery may be a lithium-ion battery.

The secondary battery provided by the embodiment of this application includes the separator as described above in this application or the separator prepared by the method as described above in this application, where the separator can enhance the reliability of the secondary battery and extend the cycle life of the secondary battery.

In some embodiments, the first base film of the separator faces (is close to) the negative electrode plate, and the second base film faces (is close to) the positive electrode plate.

### [Positive electrode plate]

In some embodiments, the positive electrode plate may include a positive electrode current collector and a positive electrode film layer disposed on at least one surface of the positive electrode current collector, where the positive electrode film layer includes a positive electrode active material. For example, the positive electrode current collector has two opposite surfaces in a thickness direction thereof, and the positive electrode film layer is provided on either or both of the two opposite surfaces of the positive electrode current collector.

When the secondary battery is a lithium-ion battery, the positive electrode active material may include, but is not limited to, at least one of lithium transition metal oxide, lithium-containing phosphate, and their respective modified compounds. Examples of the lithium-containing transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. Examples of the lithium-containing phosphate may include, but are not limited to, at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds.

In some embodiments, to further increase an energy density of the secondary battery, the positive electrode active material for lithium-ion batteries may include at least one of lithium transition metal oxide with a general formula LiₐNi_{b}Co_{c}M_{d}O_{c}A_{f} and its modified compounds, where 0.8 ≤ a ≤ 1.2, 0.5 ≤ b < 1, 0 < c < 1, 0 < d < 1, 1 ≤ e ≤ 2, 0 ≤ f ≤ 1, M is at least one selected from Mn, Al, Zr, Zn, Cu, Cr, Mg, Fe, V, Ti, and B, and A is at least one selected from N, F, S, and Cl.

For example, the positive electrode active material for lithium-ion batteries may include at least one of LiCoO₂, LiNiO₂, LiMnO₂, LiMn₂O₄, LiNi₁/₃Co₁/₃Mn₁/₃O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery in this application is a sodium-ion battery, the positive electrode active material may include, but is not limited to, at least one of sodium-containing transition metal oxide, a polyanionic material (such as phosphate, fluorophosphate, pyrophosphate, and sulfate), and a Prussian blue material.

For example, the positive electrode active material for sodium-ion batteries may include at least one of NaFeO₂, NaCoO₂, NaCrO₂, NaMnO₂, NaNiO₂, NaNi₁/₂Ti₁/₂O₂, NaNi₁/₂Mn₁/₂O₂, Na₂/₃Fe₁/₃Mn₂/₃O₂, NaNi₁/₃Co₁/₃Mn₁/₃O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X is at least one selected from H⁺, Li⁻, Na⁻, K⁻, and NH₄⁻, M' is a transition metal cation, and optionally at least one of V, Ti, Mn, Fe, Co, Ni, Cu, and Zn, and Y is a halogen anion, and optionally at least one of F, Cl, and Br.

The modified compounds of the above positive electrode active materials can be obtained by doping modification and/or surface coating modification of the positive electrode active materials.

In some embodiments, the positive electrode film layer may also optionally include a positive electrode conductive agent. The positive electrode conductive agent is not limited to a particular type in this application. For example, the positive electrode conductive agent includes at least one of superconducting carbon, conductive graphite, acetylene black, carbon black, Ketjen black, carbon dots, carbon nanotubes, graphene, and carbon nanofiber.

In some embodiments, the positive electrode film layer may also optionally include a positive electrode binder. The positive electrode binder is not limited to a particular type in this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode current collector may be a metal foil current collector or a composite current collector. For example, an aluminum foil may be used as the metal foil. The composite current collector may include a polymer material matrix and a metal material layer formed on at least one surface of the polymer material matrix. For example, the metal material may include at least one of aluminum, aluminum alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

### [Negative electrode plate]

In some embodiments, the negative electrode plate may include a negative electrode current collector and a negative electrode film layer disposed on at least one surface of the negative electrode current collector, where the negative electrode film layer includes a negative electrode active material. For example, the negative electrode current collector includes two opposite surfaces in a thickness direction thereof, and the negative electrode film layer is disposed on either or both of the two opposite surfaces of the negative electrode current collector.

The negative electrode active material may be a negative electrode active material for secondary batteries well known in the art. For example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, silicon oxide, silicon-carbon composite, silicon-nitrogen composite, and a silicon alloy material. The tin-based material may include at least one of elemental tin, tin oxide, and a tin alloy material.

In some embodiments, the negative electrode film layer may also optionally include a negative electrode conductive agent. The negative electrode conductive agent is not limited to a particular type in this application. For example, the negative electrode conductive agent may include at least one of superconducting carbon, conductive graphite, acetylene black, carbon black, Ketjen black, carbon dots, carbon nanotubes, graphene, and carbon nanofiber.

In some embodiments, the negative electrode film layer may also optionally include a negative electrode binder. The negative electrode binder is not limited to a particular type in this application. For example, the negative electrode binder may include at least one of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer may also optionally include other additives. For example, the other additives may include a thickener, for example, sodium carboxymethyl cellulose (CMC) or a PTC thermistor material.

In some embodiments, the negative electrode current collector may be a metal foil current collector or a composite current collector. For example, a copper foil may be used as the metal foil. The composite current collector may include a polymer material matrix and a metal material layer formed on at least one surface of the polymer material matrix. For example, the metal material may include at least one of copper, copper alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional other additive in a solvent and stirring them to uniformity. The solvent may be, but is not limited to, N-methylpyrrolidone (NMP) or deionized water.

The negative electrode plate does not exclude other additional functional layers besides the negative electrode film layer. For example, in some embodiments, the negative electrode plate also includes a conductive undercoating (for example, composed of a conductive agent and a binder) sandwiched between the negative electrode current collector and the negative electrode film layer and disposed on a surface of the negative electrode current collector. In some embodiments, the negative electrode plate of this application also includes a protective layer covering a surface of the negative electrode film layer.

### [Electrolyte]

In a charge and discharge process of the secondary battery, active ions intercalate and deintercalate between the positive electrode plate and the negative electrode plate. The electrolyte is between the positive electrode plate and the negative electrode plate to mainly conduct active ions. The electrolyte is not specifically limited to any particular type in this application, and may be selected depending on actual needs.

The electrolyte solution includes an electrolytic salt and a solvent. Types of the electrolytic salt and the solvent are not specifically limited and can be selected according to actual needs.

When the secondary battery in this application is a lithium-ion battery, for example, the electrolytic salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

When the secondary battery in this application is a sodium-ion battery, for example, the electrolytic salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bistrifluoromethanesulfonimide (NaTFSI), sodium trifluoromethanesulfonate (NaTFS), sodium difluoro(oxalato)borate (NaDFOB), sodium dioxalate borate (NaBOB), sodium difluorophosphate (NaPO₂F₂), sodium difluoro(dioxalato)phosphate (NaDFOP), and sodium tetrafluoro oxalato phosphate (NaTFOP).

For example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methyl sulfone (EMS), and diethyl sulfone (ESE).

In some embodiments, the electrolyte further optionally includes an additive. For example, the additive may include a negative electrode film-forming additive, or may include a positive electrode film-forming additive, or may include an additive that can improve some performance of a battery, for example, an additive for improving over-charge performance of the battery, an additive for improving high-temperature performance of the battery, and an additive for improving low-temperature performance of the battery.

In some embodiments, the positive electrode plate, the separator, and the negative electrode plate may be made into an electrode assembly through a winding process and/or a lamination process.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, at least one of polypropylene (PP), polybutylene terephthalate (PBT), and polybutylene succinate (PBS).

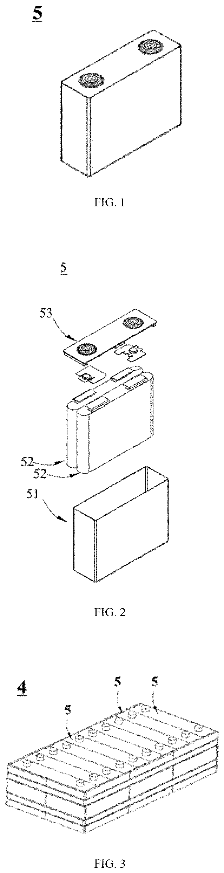

This application has no specific limitation on a shape of the secondary battery, and the secondary battery may be cylindrical, rectangular, or of any other shape. FIG. 1 shows a rectangular secondary battery 5 as an example.

In some embodiments, as shown in FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding and/or lamination. The electrode assembly 52 is packaged in the accommodating cavity. The electrolyte infiltrates the electrode assembly 52. The secondary battery 5 may include one or more electrode assemblies 52, whose quantity is adjustable as required.

A preparation method of the secondary battery is well known. In some embodiments, a positive electrode plate, a separator, a negative electrode plate, and an electrolyte may be assembled into a secondary battery. For example, the positive electrode plate, the separator, and the negative electrode plate may be made into an electrode assembly through winding and/or lamination; and the electrode assembly is put in an outer package which is filled with electrolyte after drying, followed by processes such as vacuum packaging, standing, formation, and shaping, to obtain a secondary battery.

In some embodiments of this application, such secondary batteries of this application may be assembled into a battery module. The battery module may include a plurality of secondary batteries, and a specific quantity may be adjusted based on application and capacity of the battery module.

FIG. 3 is a schematic diagram of a battery module 4 as an example. As shown in FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

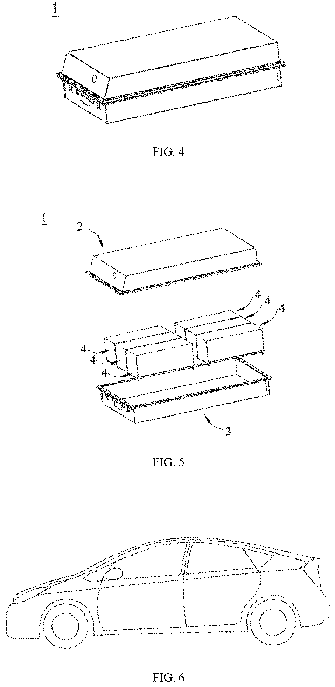

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

### Electric apparatus

This application also provides an electric apparatus including at least one of the secondary battery, battery module, or battery pack provided by embodiments of this application. The secondary battery, battery module, or battery pack may be used as a power source of the electric apparatus, or as an energy storage unit of the electric apparatus. The electric apparatus may include, but is not limited to, a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, battery module, or battery pack may be selected for the electric apparatus based on requirements for using the electric apparatus.

FIG. 6 is a schematic diagram of an electric apparatus as an example. This electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as a power source.

### Examples

Examples below more specifically describe the content disclosed in this application, and these embodiments are merely used for explanatory description. It is apparent for a person skilled in the art to make various modifications and variations within the scope of the content disclosed in this application. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1

### Preparation of separator

A first base film and a second base film were provided. The tortuosity of the first base film was 1; the tortuosity of the second base film was 0.98.

An adhesive layer slurry was provided: Boehmite, polyacrylate, and carboxymethyl cellulose were mixed uniformly in a mass ratio of 4:1:1 in an appropriate amount of deionized water as a solvent to prepare the adhesive layer slurry.

Applied the adhesive layer slurry onto the first base film through a coating machine, with another unwinding roller being the second base film, and a surface of the adhesive layer slurry on the first base film was attached, an oven temperature was controlled at 35°C, drying was performed for 5 seconds, and pressing was conducted under a pressure of 10 N to obtain the separator.

### Preparation of positive electrode plate

A positive electrode active material LiNi_{0.8}Co_{0.1}Mn_{0.1}O₂ (NCM811), a conductive agent carbon black(Super P), and a binder polyvinylidene fluoride (PVDF) were mixed uniformly at a mass ratio of 96.2:2.7:1.1 in a solvent N-methylpyrrolidone (NMP) to obtain a positive electrode slurry. The positive electrode slurry was applied on a positive electrode current collector aluminum foil, followed by processes such as drying, cold pressing, slitting, and cutting to obtain a positive electrode plate.

### Preparation of negative electrode plate

A negative electrode active material artificial graphite, a conductive agent carbon black (Super P), a binder styrene-butadiene rubber (SBR), and sodium carboxymethyl cellulose (CMC) were mixed uniformly at a mass ratio of 96.4:0.7:1.8:1.1 in an appropriate amount of deionized water as a solvent to obtain a negative electrode slurry. The negative electrode slurry was applied on a negative electrode current collector copper foil, followed by processes of drying, cold pressing, slitting, and cutting to obtain a negative electrode plate.

### Preparation of electrolyte

Ethylene carbonate (EC), dimethyl carbonate (DMC), and ethyl methyl carbonate (EMC) were mixed at a mass ratio of 30:30:40 to obtain an organic solvent, and fully dried LiPF₆ was dissolved in the above organic solvent to prepare an electrolyte with a concentration of 1 mol/L.

### Preparation of secondary battery

The positive electrode plate, the separator, and the negative electrode plate were sequentially stacked and wound to obtain an electrode assembly. The electrode assembly was placed into an outer package and dried. Then the electrolyte was injected, and processes such as vacuum packaging, standing, formation, and shaping were performed to obtain a secondary battery.

**The secondary batteries of Examples 2-9 and Comparative Examples 1-3 were similar to the secondary batteries of Example 1, with the difference being that different separators were used, as detailed in Table 1.**

In the above examples and comparative examples, the respective melting points of the first base film and the second base film were measured as follows: Took a 4 mg to 6 mg sample to be tested, placed the sample in a sample chamber of a differential scanning calorimeter, raised a temperature from 25°C to 400°C at a heating rate of 10°C/min, obtained a melting endothermic curve of the sample, and a temperature corresponding to a peak of the curve was the melting point of the sample.

In the above examples and comparative examples, the respective conductivities of the first base film and the second base film were tested using an alternating current impedance meter in accordance with NB-T 10827-2021. The conductivity of the first base film was denoted as σ₁, and the conductivity of the second base film was denoted as σ₂.

The tortuosity of the separator was denoted as τ₀, the tortuosity of the first base film was denoted as τ₁, and the tortuosity of the first base film was denoted as τ₂.

### Tests

### (1) Test for thermal shrinkage rate of separator

Sample preparation: The separator prepared above was punched into samples with a width of 50 mm and a length of 100 mm using a punching machine, and 5 parallel samples were taken and placed on a glass plate and fixed.

Sample testing: A temperature of a forced-air oven was set to 250°C, after the temperature reached the set value and stabilized for 60 minutes, the glass plate was placed into the forced-air oven, timing was started for 1 hour, and after completion, a width of the separator was measured, with the value recorded as a, in units of mm.

Thermal shrinkage rate calculation: Transverse (TD) thermal shrinkage rate = [(50-a)/50] × 100%, and an average value of the 5 parallel samples was taken as the test result.

### (2) Room temperature cycle performance test of secondary battery

At 25°C, the secondary battery was left standing for 30 minutes, then charged at a constant current of 1 C to 4.35 V, charging was continued at a constant voltage until a current was ≤ 0.05 C; then discharged at a constant current of 1 C to 2.8 V, and a discharge capacity C₁ of the first cycle was recorded.

Subsequently, the secondary battery was subjected to cyclic charging and discharging as follows: Charged at a constant current of 0.33 C₁ to 4.3 V, left standing for 5 minutes, then discharged at 1 C₁ to 3.3 V. The discharge capacity during the cycles was recorded. A capacity retention rate P of the 700th cycle = (discharge capacity of the 700th cycle/discharge capacity C₁ of the first cycle) × 100%. For accuracy, an average value of 5 parallel samples was taken as the test result.

**Table 1**

| No. | Separator structure | | | | | | | | | | | Performance test | |
|---|---|---|---|---|---|---|---|---|---|---|---|---|---|
| | First base film | | | | Second base film | | | | τ₁/τ₂ | σ₁/σ₂ | τ₀ | Transverse thermal shrinkage rate at 250°C (%) | Room temperature cycle performance |
| | Substance | Melting point (°C) | σ₁ (ms/cm) | τ₁ | Substance | Melting point (°C) | σ₂ (ms/cm) | τ₂ | | | | | |
| Example 1 | PE | 135 | 1.464 | 1 | PP | 165 | 1.763 | 0.98 | 1.02 | 0.83 | 2.1 | 1.4 | 84.2% |
| Example 2 | PE | 135 | 1.247 | 2 | PP | 165 | 1.325 | 1.9 | 1.05 | 0.94 | 4.3 | 0.9 | 85.3% |
| Example 3 | PE | 135 | 1.129 | 3 | PP | 165 | 1.289 | 2 | 1.50 | 0.88 | 5.5 | 0.7 | 88.1% |
| Example 4 | PE | 135 | 0.875 | 4 | PP | 165 | 1.289 | 2 | 2.00 | 0.68 | 6.8 | 0.5 | 84.6% |
| Example 5 | PE | 135 | 0.543 | 5.5 | PP | 165 | 1.289 | 2 | 2.75 | 0.42 | 8.3 | 0.8 | 84.3% |
| Example 6 | PE | 135 | 1.247 | 2 | PP | 165 | 1.983 | 0.5 | 4.00 | 0.63 | 3.1 | 1.2 | 91.2% |
| Example 7 | PE | 135 | 1.185 | 2.1 | PP | 165 | 1.983 | 0.5 | 4.20 | 0.60 | 3.2 | 1.5 | 84.1% |
| Example 8 | PE | 135 | 1.247 | 2 | PTFE | 327 | 2.249 | 1 | 2.00 | 0.55 | 3.4 | 0.3 | 92.5% |
| Example 9 | PE | 135 | 1.247 | 2 | PET | 270 | 2.103 | 1.2 | 1.67 | 0.59 | 3.8 | 0.4 | 91.6% |
| Comparative example 1 | PE | 135 | 1.247 | 2 | PP | 165 | 1.483 | 4.5 | 0.44 | 0.84 | 7.3 | 3.6 | 65.3% |
| Comparative Example 2 | PE | 135 | 1.464 | 1 | PTFE | 327 | 1.995 | 1.5 | 0.67 | 0.73 | 3.2 | 2.7 | 71.7% |
| Comparative example 3 | PE | 135 | 1.464 | 1 | PET | 270 | 2.103 | 1.2 | 0.83 | 0.70 | 2.9 | 3.1 | 70.9% |

From the test results in Table 1, when the tortuosity of the first base film is greater than the tortuosity of the second base film, the separator not only has a smaller thermal shrinkage rate, providing the secondary battery with high thermal stability and higher reliability, but also improves a cycle capacity retention rate of the secondary battery, enabling the secondary battery to have good long-term cycle performance.

From the comprehensive test results of Examples 1-9, adjusting the conductivity of the first base film and the second base film can cause the tortuosity of the first base film and the second base film to change accordingly. By adjusting the conductivity of the first base film and the second base film to meet a suitable range, a ratio of the tortuosity of the first base film to the tortuosity of the second base film can be controlled within a suitable range, which contributes to improving the stability, reliability, and long-term cycle performance of the secondary battery. Additionally, from the test results of Examples 8-9, using a second base film with a higher melting point and conductivity can further enhance the heat resistance of the separator and the cycle capacity retention rate of the secondary battery.

In contrast, the separators of Comparative Examples 1-3 do not satisfy the condition of this application that the tortuosity of the first base film is greater than the tortuosity of the second base film, and their heat resistance is significantly lower than that of Examples 1-9, with the cycle capacity retention rate of the secondary battery also being unsatisfactory.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A separator comprising:
a first base film;
a second base film, wherein a melting point of the second base film is higher than a melting point of the first base film; and
an adhesive layer disposed between the first base film and the second base film;
wherein a tortuosity of the first base film is greater than a tortuosity of the second base film.

2. The separator according to claim 1, wherein
a ratio of the tortuosity of the second base film to the tortuosity of the first base film is greater than 1.02, optionally ranging from 1.05 to 4.

3. The separator according to claim 1 or 2, wherein
the tortuosity of the first base film ranges from 1 to 6, optionally from 1.5 to 5.5; and/or
the tortuosity of the second base film ranges from 0.3 to 4, optionally from 0.5 to 3.5.

4. The separator according to any one of claims 1 to 3, wherein
a ratio of a conductivity of the first base film to a conductivity of the second base film is less than 1, optionally ranging from 0.4 to 0.8.

5. The separator according to any one of claims 1 to 4, wherein
the conductivity of the first base film ranges from 0.2 ms/cm to 2.0 ms/cm, optionally from 0.6 ms/cm to 1.5 ms/cm; and/or
the conductivity of the second base film ranges from 0.4 ms/cm to 2.0 ms/cm, optionally from 0.8 ms/cm to 1.5 ms/cm.

6. The separator according to any one of claims 1 to 5, wherein
a ratio of a porosity of the first base film to a porosity of the second base film ranges from 0.4 to 0.9, optionally from 0.45 to 0.65.

7. The separator according to any one of claims 1 to 6, wherein
the porosity of the first base film ranges from 30% to 60%, optionally from 35% to 50%; and/or
the porosity of the second base film ranges from 25% to 85%, optionally from 40% to 80%.

8. The separator according to any one of claims 1 to 7, wherein a ratio of a thickness of the first base film to a thickness of the second base film ranges from 0.5 to 3.5, optionally from 1.2 to 2.5.

9. The separator according to any one of claims 1 to 8, wherein
the thickness of the first base film is less than or equal to 10 µm, optionally ranging from 2 µm to 7 µm; and/or
the thickness of the second base film is less than or equal to 12 µm, optionally ranging from 1 µm to 6 µm.

10. The separator according to any one of claims 1 to 11, wherein a ratio of the melting point of the first base film to the melting point of the second base film ranges from 0.3 to 0.85, optionally from 0.4 to 0.7;
optionally, the melting point of the first base film is greater than or equal to 120°C, further optionally ranging from 125°C to 260°°C; and
optionally, the melting point of the second base film is greater than or equal to 150°C, further optionally ranging from 160°C to 350°C.

11. The separator according to any one of claims 1 to 10, wherein
a material of the first base film comprises one or more of polyolefin and derivatives thereof, halogenated polyolefin and derivatives thereof, polyether and derivatives thereof, polyether ether ketone and derivatives thereof, polyester and derivatives thereof, polyimide and derivatives thereof, and polyvinyl alcohol and derivatives thereof; and/or
a material of the second base film comprises one or more of polyolefin and derivatives thereof, halogenated polyolefin and derivatives thereof, polyether and derivatives thereof, polyether ether ketone and derivatives thereof, polyester and derivatives thereof, polyimide and derivatives thereof, and polyvinyl alcohol and derivatives thereof.

12. The separator according to any one of claims 1 to 11, wherein the adhesive layer comprises a binder; and optionally, the adhesive layer comprises a binder and a filler.

13. The separator according to claim 12, wherein the binder comprises one or more of polyacrylate, polyacrylic acid, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

14. The separator according to claim 12 or 13, wherein the filler comprises at least one of inorganic particles, organic particles, and an organic-metal framework material;
optionally, the inorganic particles comprise one or more of inorganic particles with a dielectric constant of 5 or higher, inorganic particles with ion conductivity but not storing ions, and inorganic particles capable of undergoing electrochemical reactions;
optionally, the organic particles comprise one or more of polycarbonate, polythiophene, polypyridine, polystyrene, polyacrylic wax, polyethylene, polypropylene, cellulose, cellulose modifiers, melamine resin, phenolic resin, polyester, silicone resin, polyimide, polyamide-imide, polyaramid, polyphenylene sulfide, polysulfone, polyethersulfone, polyether ether ketone, polyaryl ether ketone, and a copolymer of butyl acrylate and ethyl methacrylate; and
optionally, the organic-metal framework material comprises one or more of a structure constructed with nitrogen-containing heterocyclic ligands, a structure constructed with organic carboxylic acid ligands, and a structure constructed with mixed nitrogen-oxygen ligands.

15. The separator according to any one of claims 1 to 14, wherein
a thickness of the adhesive layer is greater than or equal to 0.3 µm, optionally ranging from 0.5 µm to 2 µm; and/or
a bonding strength between the adhesive layer and the first base film is greater than or equal to 3 N/m, optionally ranging from 4 N/m to 15 N/m; and/or
a bonding strength between the adhesive layer and the second base film is greater than or equal to 3 N/m, optionally ranging from 4 N/m to 15 N/m.

16. The separator according to any one of claims 12 to 15, wherein a percentage of the binder is greater than or equal to 10%, optionally ranging from 30% to 50%, based on a total weight of the adhesive layer; and/or
a percentage of the filler ranges from 40% to 90%, optionally from 60% to 80%, based on the total weight of the adhesive layer; and/or
a volume distribution particle size Dv50 of the filler is less than or equal to 1 µm, optionally ranging from 0.3 µm to 0.6 µm.

17. The separator according to any one of claims 1 to 16, wherein the separator satisfies at least one of the following (1) to (4):
(1) a tortuosity of the separator ranges from 1 to 15, optionally from 2 to 10;
(2) a porosity of the separator is less than or equal to 65%, optionally ranging from 35% to 55%;
(3) a transverse thermal shrinkage rate of the separator at 250°C for 1 hour is less than or equal to 1.5%, optionally less than or equal to 1%; and
(4) a longitudinal thermal shrinkage rate of the separator at 250°C for 1 hour is less than or equal to 1.5%, optionally less than or equal to 1%.

18. A secondary battery comprising the separator according to any one of claims 1 to 17.

19. The secondary battery according to claim 18, wherein the secondary battery comprises a positive electrode plate and a negative electrode plate, the separator being disposed between the positive electrode plate and the negative electrode plate, and the first base film of the separator facing the negative electrode plate, and the second base film facing the positive electrode plate.

20. An electric apparatus comprising the secondary battery according to claim 18 or 19.
